Europäisches Patentamt

European Patent Office

Office européen des brevets

(11) Publication number : **0 554 008 A2**

# (12) EUROPEAN PATENT APPLICATION

(21) Application number : 93300437.6

(22) Date of filing : 21.01.93

(51) Int. Cl.$^5$ : **A23F 5/26,** A23F 5/40,
A23F 5/14

(30) Priority : 27.01.92 US 826347

(43) Date of publication of application :
04.08.93 Bulletin 93/31

(84) Designated Contracting States :
AT BE CH DE DK ES FR GB GR IE IT LI LU MC
NL PT SE

(71) Applicant : KRAFT GENERAL FOODS, INC.
250 North Street
White Plains New York 10625 (US)

(72) Inventor : Stahl, Howard David
2 Claremont Road
Scarsdale, New York 10583 (US)
Inventor : Wasserman, Gerald Sigmund
1200 Washington Street, Apartment 5c
Hoboken, New Jersey 07030 (US)
Inventor : Forman, Todd Michael
15-I Scenic Drive
Croton-on-Hudson, New York 10520 (US)
Inventor : Skiff, Ronald Harry
28 Marlin Drive
Whippany, New Jersey 07981 (US)

(74) Representative : Eyles, Christopher Thomas
W.P. THOMPSON & CO. High Holborn House
52-54 High Holborn
London WC1V 6RY (GB)

(54) Coffee product high in dietary soluble fiber and process for making it.

(57)    A process for the production of a fiber-rich coffee product, and the resultant product. Partially extracted roast and ground coffee is contacted under conditions effective to extract a fiber-rich coffee extract which contains a high concentration of soluble fiber. The fiber-rich extract may optionally be subjected to ultrafiltration to provide a concentrated fiber-rich retentate. The fiber-rich products may be used to fortify coffee or other edible products with soluble fiber. The partially extracted roast and ground coffee is preferably obtained by a first, mild atmospheric extraction of roast and ground coffee.

Technical Field

The present invention relates to dietary soluble fiber enriched coffee products and to processes for the production of dietary soluble fiber enriched coffee products in which the dietary soluble fiber is 100% coffee-derived. More particularly, the invention relates to dietary soluble fiber-containing coffee products comprising at least 30% by weight of fiber, based on the dry weight of soluble solids, such as soluble and roast and ground coffee products containing 30-70% by weight, based on the dry weight of soluble solids, of 100% coffee-derived dietary soluble fiber. In another aspect, the invention relates to a process for the extraction of roast and ground coffee to produce a 100% coffee-derived dietary soluble fiber enriched product, as well as a combination extraction and filtration process which also produces a 100% coffee-derived soluble fiber enriched product.

Background of the Invention

A consensus of an expert panel on food safety and nutrition of the Institute of Food Technologists' recommends consumption of foods, rather than food supplements, as a source of dietary fiber. This approach to fiber consumption is supported by epidemiological studies in which diets containing fiber-rich foods are associated with reduced risk of disease. In addition, several positive physiological responses are indicated as a result of the consumption of soluble fiber-containing foods in Schneeman, B., Soluble vs. Insoluble Fiber-Different Physiological Responses-The type of fiber consumed seems to have an impact on the physiological response, Food Technology, Vol. 41, pp. 81-81 (February, 1987).

U.S. patent 4,997,665 published on 5 March 1991 also mentions that increased health awareness has created a demand for dietary fiber supplements, which demand is projected to exceed 600 million pounds (272.16 million kg) by 1992. This patent is directed to a method for the production of modified insoluble dietary fiber by the conversion of lignocellulose slant fiber through hydrolysis. Several sources of this plant fiber are mentioned including, corn bran, oat bran, red wheat bran, rice bran and mixed hardwood.

Accordingly, the provision of food products containing higher levels of soluble fiber is a desirable objective in view of the potential health benefits of such products.

The article, "A Guide to Calculating Intakes of Dietary Fibre," Southgate, D.A.T. et al., Journal of Human nutrition, Vol. 30, pp. 303-313 (1976), mentions the fiber content of several different food products. Among these is mentioned instant coffee which is said to possess 15.55% of non-cellulosic polysaccharides. This article further suggests that the high concentration of dietary fiber in instant coffee warrants further study.

In a 1988 text, a cup of instant coffee made from 2-4 grams of powder is said to contain in the region of 0.5-1.5 grams of indigestible polysaccharide, which is characterized by the author as dietary fiber. Clarke, R.J. and Macrae, R., Coffee, Vol. 3 Physiology, Chapter 5, pages 125, 126, 132, 133, 139, Elsevier Applied Science Publications, new York (1988). However, close review of this article and of the Thaler article (No. 27) referenced by Clarke and Macrae shows that about half of this indigestible polysaccharide material has a molecular weight of below 10,000 daltons and of the remainder, only a small portion is derived from arabinogalactan. The Chemistry of Coffee Extraction in Relation to Polysaccharides, Thaler, H., Food Chemistry, Vol. 4, pp. 13-22 (1970).

Total dietary fiber (TDF) which is defined as plant cell wall polysaccharides not digestible by humans, is the sum of insoluble dietary fibers (IDF) and soluble dietary fiber (SDF). SDF is soluble in water and includes polysaccharides, pectins, gums, mucilages, and some hemicelluloses. In the USA, an enzymatic-gravimetric procedure (the "Prosky method") has been adopted for the determination of TDF. A "modified Prosky method" has been developed in which the IDF is separated from the SDF by filtration. The filtrate or SDF, typically high molecular weight polysaccharides, is then precipitated from an 80% alcohol solution and separated by filtration from sugars, oligosaccharides, amino acids and peptides.

In England, the "Englyst method" has been recommended. This is an enzymatic-chemical method which measures the constituent sugars, after acid hydrolysis, by gas-liquid chromatography.

We have developed a more rapid method which requires considerably less time than the Prosky and Englyst methods. The present method is size exclusion chromatography (SEC) which is similar to gel permeation chromatography (GPC) in which a solution of coffee solids can be fractionated according to molecular weight. Larger or higher molecular weight molecules are excluded from the pores of the gel and have longer retention time. The analytical procedure is described hereinafter.

Using the present SEC method, we have determined that the dietary soluble fiber content of commercially available soluble coffee products is from 17-25.9%. This compares closely to the values (17.5-23.2%) obtained in a commercial laboratory using the modified Prosky method. Thus, the "soluble fiber" which is the subject of the present invention is a high molecular weight dietary soluble fiber, of the type measured by the Prosky method. The term "soluble fiber" which is the subject of the present invention is thus defined as dietary soluble fiber having a molecular weight of at least about 100,000 daltons, and the term is so used in the present specification and claims. By the criteria of the present invention, essentially only the fiber derived from the arabinogalactan fraction of the extracted carbohydrates, together with a small portion of the arabinogalactan which has not broken down, qualifies as soluble fiber. Accordingly, the instant coffee products mentioned by Clarke, et al. contain only a small percentage of soluble fiber having a molecular weight in excess of 100,000 daltons.

Such commercial instant coffee products are made by the extraction of roast and ground coffee by a rather harsh percolation process which results in significant hydrolysis of the soluble fiber fraction of the coffee extract resulting in a lower molecular weight. The commercial production process generally involves a multi-stage extraction having a total residence time in excess of 60 minutes and employing temperatures of up to, or in excess of, 190 degrees celsius.

The importance of molecular weight in the context of dietary soluble fiber will also be apparent in light of Japanese published patent application "Kokai" no. 3 (1991) - 15,364 published January 23, 1991 which relates to the recovery of soluble fiber from spent coffee grounds resulting from the production of soluble coffee products. The spent grounds are treated with aqueous sodium hydroxide for 8-24 hours at 20-50°C (or at 120-180°C without sodium hydroxide) to produce a hemi-cellulose rich extract. After separation of sludge, the material is acidified to form a hemi-cellulose coagulate. The coagulate is then isolated and then used as an enzyme substrate which is treated with xylanase to degrade the hemi-cellulose to oligosaccharides, which are low molecular products having up to 10 saccharide units, and a molecular weight of about 2000 or less. These materials are thus not soluble fiber as measured by the Prosky method or as defined herein.

Commercial extraction equipment and conditions have been designed to obtain the maximum yield of soluble solids with the desired flavor character. Conceptually, most commercial systems can be represented by a series of countercurrent batch extractors. Percolation trains consisting of 5-10 columns are the norm. Height to diameter ratios usually range from 4:1 to 7:1. Feed water temperatures of 154-182°C are common and the final extract normally exits at 60-82°C.

In commercial extraction, the yield is generally controlled through adjustment of the soluble solids drawn off from the final stage. Extraction yield is calculated from the weight of extract collected and the soluble solids concentration is measured by specific gravity or refractive index. Soluble solids yields (roast yields) of 24-48% or higher, are possible. The latest technology in thermal extraction of spent grounds provide roast yields in excess of 60%.

The fresh water feed in the commercial extraction equipment is fed at a pressure well above one atmosphere and temperatures high enough to hydrolyze the polysaccharides in the coffee. The last extraction stage (freshest column) generally comprises contacting an extract of these polysaccharides with unextracted roast and ground coffee at temperatures near the atmospheric boiling point.

Another hydrolysis process for solubilizing partially extracted roasted and ground coffee is disclosed in U.S. patent 4,798,730 published on 17 January 1989. In that process a fixed bed of partially extracted roast and ground coffee is subjected to a second extraction step at 190-230° celsius over a period of 30-120 minutes which is sufficient to achieve hydrolysis and remove at least 50% of the mannan and produce a soluble solids yield of 55-68% by weight.

A second method for the hydrolysis of a coffee extraction residue is disclosed in U.S. patent 4,508,745 published on 2 April 1985. In this process, the goal is to produce a mannan oligomer solution having oligomers from DP 1 to DP 10. This goal is achieved by hydrolyzing spent grounds from a commercial percolation system in the presence of an acid catalyst at a temperature of 160-260° celsius, a pH of 0.5 to 4 and for a period of 6-60 seconds. These acid hydrolysis conditions are severe enough to fully hydrolyze the arabinogalactans in the coffee such that they are no longer within the soluble fiber range.

Another aspect of a coffee extraction process is disclosed in U.S. patent 4,900,575 published on 13 February 1990. This process relates to the recovery of the aromatic components of an aroma stream which are generated by thermal hydrolysis of partially spent grounds from an extracted roast and ground coffee. The hydrolysis process disclosed in this patent is carried out at a temperature of from 200 to 260° celsius over a period of 1-15 minutes. In this process, a majority of the arabinogalactan present in the original roast and ground coffee is removed in an initial extraction. Therefore, the partially spent grounds used as a starting material for the thermal hydrolysis is depleted in its arabinogalactan content.

Finally, in EP-A-0363529 a process for the solubilization of partially extracted roasted and ground coffee is disclosed. More particularly, the method involves hydrolyzing the spent grounds of a partially extracted roasted and ground coffee (the spent grounds having had a majority of the arabinogalactan extracted therefrom during the initial extraction) in a thermal plug flow reactor (TPFR) at a temperature of 200 to 260° celsius over a period of 1-15 minutes, in the absence of an acid catalyst, in order to effect a 10-60% incremental yield of a product wherein at least 50% of the mannan is removed.

In all of the foregoing processes, rather severe hydrolysis conditions were employed which would break down the soluble fiber fraction of roast and ground coffee extract and lead to products having a low soluble fiber content. Accordingly, these processes are not suitable for the production of coffee products having a high soluble fiber content.

Thus, it is an object of the present invention to provide a process for the production of a fiber-rich coffee product having a high soluble dietary fiber content, particularly such products which are 100% coffee-derived.

It is a further object of the present invention to provide coffee products, such as a soluble or roast and ground coffee product, which comprises at least 30% by weight, based on the dry weight of the soluble solids, of soluble dietary fiber, which fiber is preferably 100% coffee-derived.

It is a still further object of the invention to provide a method of producing a 100% coffee-derived soluble fiber-enriched product.

These and other objects of the present invention will be apparent from the Summary and Detailed Description which follow.

## Summary of the Invention

The present invention, in a first aspect, relates to a process for the production of a soluble fiber-rich product derived from partially extracted roasted and ground coffee comprising the steps of:

contacting partially extracted roasted and ground coffee with water at a temperature and for a time sufficient to produce spent coffee grounds and a soluble fiber-rich coffee extract containing at least 30% by weight of soluble fiber having a molecular weight at least about 100,000 daltons, based on the total dry weight of soluble solids; and

separating said fiber-rich coffee extract from said spent coffee grounds.

In a further aspect, the present invention relates to a coffee product which comprises at least 30% by weight, based on the total dry weight of soluble solids, of 100% coffee-derived soluble fiber having a molecular weight in excess of about 100,000 daltons.

In a further aspect, the present invention comprises coffee products having from 30-70% by weight, based on the total dry weight of soluble solids, of 100% coffee-derived soluble fiber.

In a further aspect, the present invention relates to coffee products having a sufficient content of 100% coffee-derived soluble fiber to deliver at least 0.5 grams of 100% coffee-derived soluble fiber per 6 ounce (177.4 ml) cup of coffee brew.

## Detailed Description of the Invention

As mentioned above, total dietary fiber, defined as plant cell wall polysaccharides indigestible by human enzymes, is the sum of insoluble dietary fiber (IDF) and soluble dietary fiber (SDF). SDF is material that is soluble in water, indigestible with human enzymes and includes polysaccharide groups, pectins, gums, mucilages and some hemicelluloses. Currently there are two generally accepted methodologies for measuring dietary fiber: enzymatic-gravimetric and enzymatic-chemical.

In the United States, the determination of total dietary fiber by an enzymatic-gravimetric procedure has been officially adopted by the AOAC (Prosky et al., J. Assoc. Off. Anal. Chem. 68, pp. 677-679 and 399 sec.s43.A14-43.A20 (1985)). An interlaboratory study by Prosky et al. (J. Assoc. Off. Anal. Chem., Vol. 71, No. 5, pp. 1017-1023 (1988), evaluated a modification of the above-mentioned official method in which IDF is separated from the SDF by filtration and quantified gravimetrically. The SDF, typically high molecular weight polysaccharides, is precipitated from an 80% alcohol solution and separated by filtration from the products of enzymatic digestion of starch and protein which remain soluble. The SDF is then quantified gravimetrically. The total dietary fiber is obtained by summing the SDF and the IDF.

In the United kingdom, a procedure developed by Englyst (Englyst, H.N., and Cummings, J.H., "An Improved Method for the Measurement of Dietary Fibre as the non-Starch Polysaccharides in Plant Foods," J. Assoc. Off. Anal. Chem., Vol. 71, pp. 800-814 (1988)) has been recommended to become an official method for measuring dietary fiber. This is an enzymatic-chemical method which measures the constituent sugars in dietary fiber, after acid hydrolysis, by gas-liquid chromatography. This method includes a modification to measure total soluble and insoluble dietary fiber.

For the purpose of the present invention, a rapid and reproducible instrumental method for measuring the dietary fiber in coffee-derived products was developed. Since coffee contains negligible amounts of starch and, after roasting, minor amounts of native protein, the enzymatic digestion steps of the above analytical methods were eliminated to save time.

The method chosen to measure "soluble fiber" content in accordance with the present invention is size exclusion chromatography. In a recent study, McLaughlin and Gay ("Differentiation of Dietary Fiber Sources by Chemical Characterization," found in, "new Developments in Dietary Fiber," I. Furda and C. Brine eds., pp. 295-310, Plenum Press, New York (1990)) size exclusion chromatography was used to characterize the water soluble fraction of several fiber sources.

The analytical procedure used to determine "soluble fiber" in accordance with the present invention is as follows. First, a solution of coffee solids at about a 1-3% solids content is prepared. The solution is filtered through a 0.45 micron filter. The solvent is deionized water that is filtered with a 0.22 micron filter which has a flow rate of 1.0 ml/min. Injection volume of the sample is 50 to 100 microliters into an HPLC system fitted with two size exclusion columns in series and a small guard columns of the same packing material. The columns were jacketed in a heater set at 37° C. An analysis time of 20-25 minutes is employed. A pullulan standard of 100,000 daltons is employed as the fiber cutoff marker.

The percentage of soluble fiber is then determined by measuring the relative area of the chromatogram above about 100,000 daltons, relative to the total gel permeation chromatography (GPC) area for the sample.

The brew or extract solids derived from the arabinogalactan fraction in coffee can be a high molecular weight material probably having a Dp of about 500 to 5,000 sugar units or the equivalent of a molecular weight of about 100,000 to 1 million daltons. Due to its high degree of branching it is soluble in water and produces solutions of low viscosity. The arabinogalactan fraction of the coffee is the primary source of soluble fiber in accordance with the invention. The arabinogalactan fraction of a particular product can be determined by quantitative saccharification in accordance with the process of, "Method: Quantitative Saccharification of Wood and Cellulose, J. Saeman et al., Ind. Eng. Chem., Anal. Ed. pp. 35-37 (1945).

In the first aspect of the present invention, the extraction process is carried out on partially extracted roast and ground coffee by contacting it with water at a temperature and for a time sufficient to produce a fiber-rich extract and spent grounds. This step has for its purpose the extraction of a fraction containing a high concentration of soluble fiber. As a result, the soluble solids of the fiber-rich extract generally comprise at least 30%, preferably 30-70%, and more preferably at least 40-60% by weight of soluble dietary fiber on a dry basis, having a molecular weight of at least about 100,000 daltons, much of which will be derived from the arabinogalactan fraction in the spent grounds.

The extraction step may be carried out in the autoclave section of conventional percolation equipment known in the art in which extraction water is preferably fed in countercurrent flow under sufficient pressure to maintain the water in the liquid phase.

The extraction step is preferably carried out under conditions of time and temperature to produce an extract having a soluble fiber content of at least 30% by weight based on the total dry weight of the extracted soluble solids. The amount of extract will generally increase with both time and temperature but the amount of soluble fiber extracted will also depend on other factors, notably hydrolysis of the solubilized carbohydrate polymers. Thus, if the extraction is carried out under very mild conditions the total amount of extract is small and the yield of soluble fiber will also be small despite the relatively high proportion of soluble fiber in the extract. On the other hand, if the extraction is carried out under harsh conditions such that substantial hydrolysis occurs, the yield of soluble fiber will also be small because of the relatively low proportion of soluble fiber in the extract, despite a relatively large total amount of extract solids, because of hydrolysis of the arabinogalactan-derived polymers to a molecular weight of less than 100,000 daltons, which results from the harsh conditions of extraction.

To determine the time and temperature conditions required to produce such fiber-rich extracts from partially extracted roast and ground coffee, one can employ equations for the thermal hydrolysis reactions occurring during the extraction step based on Arrhenius type kinetic reaction equations. For the creation and subsequent degradation of dietary soluble fiber as defined in the present specification, the reactions can be represented by a series of two first order irreversible reactions. Integration of the Arrhenius kinetic equations for these two reactions in the manner taught in, "Chemical Reaction Engineering: An Introduction to the Design of Chemical Reactors," Levenspiel, O., pp. 47, 172-73 and 22-23, John Wiley & Sons, New York (1962), gives the following equation:

$$B = A_0 [k_1/(k_2 - k_1)] [e^{-k_1 t} - e^{-k_2 t}] \quad (1)$$

wherein $A_0$ is the weight fraction on a dry basis of the partially extracted roast and ground coffee starting material which is arabinogalactan, $k_1$ is the rate constant for the hydrolysis of arabinogalactan to soluble fiber in accordance with the present invention, $k_2$ is the rate constant for the hydrolysis of soluble fiber to degradation products, t is time and B is the weight fraction on a dry basis of soluble fiber having a molecular weight in excess of about 100,000 daltons.

It is clear from the good correlation of arabinogalactan hydrolysates to dietary soluble fiber content in commercial products that the majority of the dietary soluble fiber will be derived from the thermal hydrolysis of the arabinogalactan fraction in the partially extracted roast and ground coffee. Accordingly, $A_0$ is assumed to be the initial arabinogalactan content of the partially extracted roast and ground coffee for the purpose of this equation. The arabinogalactan content of the partially extracted roast and ground coffee can be estimated by quantitative saccharification.

The rate constants for the two irreversible hydrolysis reactions may be described as: $k_1 = k_{1,0}e^{- H_1/RT}$ and $k_2 = k_{2,0}e^{- H_2/RT}$, respectively, wherein R is the gas law constant, $H_1$ and $H_2$ are the activation energies for the respective reactions and T is the absolute temperature in degrees Rankine at which the reaction is taking place. The constants are determined for particular spent grounds by conducting a series of extraction runs at various times and temperatures. While five different runs will theoretically suffice, it is preferable to calculate the constants from the data from at least 10 different runs, and more preferably at least 25, 50 or 100. Regression analysis of data from test runs with a partially extracted roast and ground coffee which was a blend of Arabicas and Robustas in a 1:3 ratio, 25% extracted on a dry solids basis in the first, partial extraction step, gives the following values for the constants:

$k_{1,0}$ = 4.52 x 10$^9$ (sec$^{-1}$), $k_{2,0}$ = 280 sec$^{-1}$, $H_1/R$ = 22163° Rankine (°R) [12312.8°C] and $H_2/R$ = 11082°R [6156.7°C].

Therefore, by substituting the values of these constants into equation (1), determining the initial weight fraction of arabinogalactan in the partially extracted roast and ground coffee by quantitative saccharification, and choosing the desired weight fraction of soluble fiber having a molecular weight in excess of about 100,000 daltons, one can solve the equation by trial and error methods to determine the reaction time and temperature required to achieve the desired weight fraction of soluble fiber. When the only objective of the extraction process is the production of a soluble fiber-rich product having a particular soluble fiber content, equation (1) will provide the time and temperature for the reaction.

However, when one desires to maximize the yield of soluble fiber, a second equation must be employed to determine the proper conditions. More particularly, the total roast yield of soluble solids liberated by thermal hydrolysis of the partially extracted roast and ground coffee can also be represented by an Arrhenius type reaction kinetic relationship of the form of the following equation:

$$E = D_0 [1 - e^{- kt}] \quad (2)$$

wherein E is the total amount of soluble solids solubilized by the extraction step, $D_0$ is the initial weight fraction of thermally hydrolyzable material present in the partially extracted roast and ground coffee which can potentially be solubilized, k is the rate constant for the solubilization of the initial soluble solid material (i.e. conversion of $D_0$ to E) and t is the reaction time.

$D_O$ is determined by taking the total dry solids fraction of the initial roasted and ground coffee and subtracting the soluble solids yield from the first extraction step, and by subtracting an estimate of the initial total cellulose, lipid, etc. level known from the literature for the particular roasted blend. If the literature does not specify,the total cellulose, lipid, etc. level for a particular blend, known methods for determining this level may be used.

The rate constant k can be described by the equation: $k = k_0e^{- H/RT}$, wherein $k_0$ = 1.15 x 10$^8$ (sec$^{-1}$) and H/R = 19977° Rankine [11098.3°c]. The values of $k_O$ and H/R are determined by regression analysis. Thus, by substituting these values into equation (2) and calculating the initial weight fraction of thermally hydrolyzable material present in the partially extracted roast and ground coffee starting material, one can calculate, using known trial and error methods, the conditions of time and temperature required to achieve a particular amount of extraction of soluble solids.

Using equation (1) one can maximize the total output of soluble fiber from the process by calculating conditions which will give high yields of soluble solids. Using a combination of equations (1) and (2) one can go one step further and maximize the total output of soluble solids and at the same time produce products having a relatively high concentration of soluble fiber. Illustrations of the use of these equations are given in Example 21.

For alternative blends of roast and ground coffee, or for pure coffees, the kinetics of soluble fiber production and degradation will be substantially the same leading to similar rate constants and gas constants. However, the values for $A_0$ and $D_0$ must be adjusted for each individual coffee blend since different coffees will contain differing amounts of arabinogalactan and other solubulizable solid materials.

It is anticipated that the conditions of time and temperature determined by the foregoing calculations will be subject to experimental error. Based on current results, it is expected that experimental error will not be more than about 10% or 15%, and preferably not more than about 5%.

In general, the reaction temperature will suitably be in the range of 160 to 250°C for about six minutes or less, the longer time being appropriate for lower temperature and vice versa. The object, of course, is to maximize the recovery of soluble dietary fiber. At temperatures below about 160°C the time required is long which leads to reduced recovery of soluble dietary fiber. At temperatures above about 250°C, even a very short extraction time (a minimum of about five seconds as a practical matter) will also result in reduced recovery of the soluble dietary fiber. Preferably, extraction is carried out at a temperature in the range of 185-210°C for two minutes down to about five seconds, it being again understood that the longer time is appropriate at the lower temperature and vice versa. Some hydrolysis, of course, will always occur during extraction, particularly at higher temperatures.

The remaining fraction, the spent grounds, is primarily made up of insoluble materials such as mannan and the browning products in coffee, which may chemically bind with mannan.

In the second step of the process of the present invention, the soluble fiber-rich coffee extract is separated from the spent grounds to give a soluble fiber-enriched product. This separation may be accomplished in any conventional manner for separating liquids and solids, such as by using centrifugation.

In order to produce a partially extracted roast and ground coffee for use in the extraction process of the present invention, roast and ground coffee is extracted to produce a first coffee extract and partially extracted roast and ground coffee. This step has for its purpose the removal of the easily removable compounds which include the aroma, flavor, electrolytes, caffeine, and much of the color-containing materials. These materials will be contained in the first coffee extract. The remaining components of the coffee will be found in the partially extracted roast and ground coffee. It is particularly preferred, in accordance with the invention, that the partially spent grounds retain a majority, and more preferably at least 65% by weight of the original content of the soluble dietary fiber and soluble dietary fiber precursors, of the roast and ground coffee.

The first extraction step can be performed in conventional fixed percolators such as those presently employed for the hydrolysis of roast and ground coffee. However, this extraction step is preferably carried out under relatively mild conditions with the aim of extracting the first coffee extract while minimizing hydrolysis of the coffee during this extraction step. Thus, in line with this goal the coffee is extracted to a roast yield of 15-40%, and more preferably to a roast yield of 20-30%.

The first extraction step is suitably carried out under atmospheric or close to atmospheric conditions and most preferably is done in an atmospheric pulsed percolation column in countercurrent flow with hot water preferably at a temperature of about 100-250°F (about 37.8-121.1°C), typically about 225°F (about 107.2°C). It is important to carry out the first extraction step under conditions sufficiently mild to prevent large amounts of the soluble fiber fraction of the coffee from being extracted into the first coffee extract. Accordingly, the first coffee extract preferably contains not more than 40% by weight of the total arabinogalactan contained in the original roast and ground coffee. More preferably, the first coffee extract contains less than 30% by weight of the total arabinogalactan from the original roast and ground coffee.

In addition, the partially extracted roast and ground coffee also contains additional materials such as mannan, a polysaccharide of d-mannose generally having up to 40 d-mannose units in the polysaccharide. Thus, the partially extracted roast and ground coffee contains a soluble fiber fraction and a second fraction containing other materials such as mannan and browning products.

If a dry end product is desired, the process may include a drying step. Conventional drying methods such as spray drying or freeze drying may be employed. The soluble fiber-containing material may be dried as flakes or granules.

Further, in a preferred embodiment the partially extracted roast and ground coffee is milled to decrease the average particle size to under 500 microns prior to the extraction of the soluble fiber-rich fraction. This step can be accomplished using conventional milling equipment. It has been found that greater amounts of soluble fiber can be extracted from smaller particle size partially extracted roast and ground coffees.

A desired end product to be made by the process of the present invention is a soluble dietary fiber-enriched product, the soluble dietary fiber content of which is 100% coffee-derived. For example, a soluble dietary fiber-rich product can be employed to fortify coffee products with soluble dietary fiber.

Such soluble dietary fiber-rich products contain at least 30% by weight, based on the dry weight of soluble solids, of 100% coffee-derived soluble fiber. More preferably, such soluble fiber-rich products contain at least 50% by weight, and most preferably at least 70% by weight, of 100% coffee-derived soluble dietary fiber based on the dry weight of soluble solids in the soluble dietary fiber-rich product.

The soluble dietary fiber-rich products of the invention can be used to fortify coffee products to provide a coffee product which will give 0.5 grams of soluble fiber per 6 ounce (177.4 ml) cup of coffee beverage. This figure is based on the inclusion of about 0.8-1.2% by weight of soluble coffee solids in each 6 ounce (177.4 ml) cup of coffee beverage. The fortified coffee product preferably provides at least 0.7 grams of soluble fiber per 6 ounce (177.4 ml) cup of coffee.

In an alternative embodiment of the present invention, a 100% coffee-derived soluble fiber-enriched product can be obtained by subjecting partially extracted roast and ground coffee, preferably resulting from aqueous extraction under mild conditions, to extraction under conditions suitable for the extraction of soluble fiber, and then subjecting the extract to filtration to obtain a concentrated, soluble fiber-enriched fraction. As mentioned above, the partially extracted roast and ground coffee preferably retains a majority, and more preferably retains at least 65% by weight of the original content of soluble dietary fiber and soluble dietary fiber precursor, of the roast and ground coffee. The filtering step preferably comprises membrane separation using a suitable ultrafiltration membrane. One suitable membrane is the ABCOR #MFK603 Module. Diafiltration is a preferred technique.

The soluble fiber-rich product of the present invention is preferably extracted under conditions suitable to maximize the yield of soluble fiber. A typical scheme for batch diafiltration allows half of the solution to permeate the ultrafiltration membrane, adding water to the retentate to return it to its original volume and repeating the process until the desired concentration of soluble fiber in the retentate is obtained. With each successive filtration, the relative concentration of soluble fiber in the retentate will increase.

One can characterize the retention of a particular species by a retention coefficient defined as:

$$R = C_{pi}/C_{ri} \quad (3)$$

wherein R is the retention, $C_{pi}$ is the concentration of the particular species in the permeate and $C_{ri}$ is the concentration of the same species in the retentate. Since the ultrafiltration membrane functions similarly for species of similar molecular size, it is convenient to group the species by molecular weight range and use an average R for species in each range.

Therefore, for a 50% reduction in volume for species having a molecular weight cutoff of about 100,000 daltons, the retention coefficient is about 0.98 and thus:

$$C_{ri(final)} = C_{ri(initital)}(2^{0.98})/2 \quad (3a)$$

Using such retention coefficients, one can determine the concentration profile after successive filtration steps. Thus, if one wants to concentrate the fiber in a particular retentate to a particular concentration, one can calculate the number of, successive filtration steps required to achieve this concentration.

The soluble dietary fiber-containing product of the present invention can be used to fortify conventional roast and ground or soluble coffee products with soluble fiber to produce high fiber coffee products. The product can also be recombined with aroma and flavor to produce high fiber soluble coffee products. Further, the soluble fiber product of the present invention may be used in other products wherein higher levels of 100% coffee-derived soluble fiber are desired.

When blending the soluble fiber-rich extract of the present invention with a coffee product, one may first concentrate the soluble fiber-rich fraction and add it to a liquid coffee extract, followed by drying to provide a dry, soluble coffee product. Another alternative is to dry separately both a liquid coffee extract and a soluble fiber-rich product and then combine them into a dry, soluble coffee product. Conventional agglomeration methods may be employed.

When blending the present soluble dietary fiber-rich extract with roast and ground coffee, a preferred method is to mix an agglomerated fiber-rich fraction with roast and ground coffee or to co-agglomerate roast and ground coffee with the fiber-rich fraction. Another method is to provide a solution of the soluble fiber-rich product, then spray this solution onto at least a portion of roast and ground coffee and then dry the resulting mixture. Of course, other blending methods may also be employed.

A particular application of the present process is in the extraction of partially extracted roast and ground coffee resulting from extraction under relatively mild conditions such as are used to make liquid coffee products. The commercial preparation of such products results in the generation of large amounts of spent grounds having a high arabinogalactan content. Such spent grounds are subjected to extraction in accordance with the invention to maximize the content of soluble dietary fiber in the extract.

An integrated process can be carried out in accordance with the invention in which roast and ground coffee is subjected to a multi stage extraction. In a first extraction, the coffee is subjected to mild extraction conditions to produce a partially extracted roast and ground coffee and a first extract rich in aroma and flavor, with minimum extraction of soluble fiber. The coffee grounds preferably retain a majority, and preferably 65% by weight, of the original content of soluble dietary fiber or precursors thereof, of the roast and ground coffee. In a second extraction, the partially extracted roast and ground coffee from the first extraction is further extracted under conditions which extract the soluble fiber to produce a soluble dietary fiber-rich fraction. It is possible, in such an integrated process to combine all of the product of the first extract and all of the product of the second extract to produce a combined product high in soluble fiber. In that event, the amount of each extract is referred to herein as the "stoichiometric amount". It is also contemplated that the amount of one of the two extract products can be less than its stoichiometric amount.

The present invention will be further illustrated by the examples which follow.

Example 1

A commercial roast and ground coffee was twice brewed in a domestic drip filter brewer to produce a 27% roast yield brew and partially extracted grounds. Batches of the grounds were extracted at temperatures of 160 and 190°C and for periods of one and two minutes. The percentage of soluble solids released by the treatment (based on the dry weight of the grounds) and the molecular weight spectrum using size exclusion chromatography were measured. The filter had a molecular weight cutoff of about 100,000 daltons and the fraction above about 100,000 daltons was considered to be mostly arabinogalactan. The results of the tests are presented in Table 1.

## Table 1

| Run No. | Temperature | Time | Amount of Soluble Solids Extracted | | |
|---|---|---|---|---|---|
| | | | Total Extract | Low MW* Fraction | High MW** Fraction |
| | (°C) | (min.) | (Wt%) | (Wt%) | (Wt%) |
| 1A | 160 | 1 | 9 | 30 | 70 |
| 1B | 160 | 2 | 9 | 33 | 67 |
| 1C | 190 | 1 | 11.5 | 36 | 64 |
| 1D | 190 | 2 | 17 | 45 | 55 |

**(*Molecular weight less than about 100,000 daltons)**
**(**Molecular weight greater than about 100,000 daltons)**

It will be seen that as time or temperature increases, the amount of both high molecular weight and low molecular weight soluble solids are increased and that as temperature increases the proportion of low molecular weight solids increases more rapidly. At the higher temperature, the proportion of low molecular weight soluble solids increases more rapidly with time, due to hydrolysis.

Example 2

About 1200 grams of commercial roast and ground coffee (12 oz. can) were extracted in a single laboratory sized extraction column (dimensions 2 x 120 inches [5.08 x 304.80 cm]) by passing about 2400 grams of hot water (2 draw off factors) at about 210°F (about 98.9°C) up the column. Upon exiting the column, the hot extract was passed through a coil immersed in an ice bath to cool the extract below room temperature before collection. Analysis indicated that the extraction yielded about 29% of the weight of coffee. The atmospheric partially spent grounds were then treated in a thermal plug flow reactor (190°C for 1 minute). The soluble fiber-rich fraction yield was 12.4% roast yield.

The fraction rich in arabinogalactan-derived soluble fiber was then vacuum concentrated and then freeze dried. The soluble fiber content in the freeze-dried fraction was determined to be 72.5% based on the total solids.

Example 3

In order to determine the effect of coffee particle size on the soluble fiber composition of the extracted solids, a small (22 ml.) magnetically stirred Paar bomb, heated in a constant temperature oil bath, was used. The slurry from an atmospheric pulsed column in a pilot plant first coffee extraction step was wet screened to give four fractions: +12 U.S. screen [>1.70 mm] (the major fraction; through 12 on 20 [<1.70 mm and >850 μm]; through 20 on 40 [<850 μm and >425 μm]; and through 40 on 140 [<425 μm and >106 μm]. The through 140 [>106 μm] fraction (mostly colloidal) was discarded. The fractions were dried for use in this example.

A five percent slurry of each of the fractions was placed in the Paar bomb and heated in a 175°C oil bath. The slurry achieved a temperature of about 160°C after six minutes and was heated for an additional 5.5 minutes (final temp. about 175°C). The Paar bomb was then rapidly cooled in an ice bath (100°C drop in the first minute). The results of the experiment are given in Table 2. results of the experiment are given in Table 2.

9

## Table 2

| Fraction U.S. Screen | Fiber* in Extracted Solids (% d.b.) |
|---|---|
| +12 [>1.70 mm] | 45.1 |
| Through 12 on 20 [<1.70 mm and >850 $\mu$m] | 47.2 |
| Through 20 on 40 [<850 $\mu$m and >25$\mu$m] | 49.7 |
| Through 40 on 140 [<425 $\mu$m and >106 $\mu$m] | 58.2 |

(*Molecular weight above about 100,000 daltons)

This experiment demonstrated that the soluble fiber component was more effectively extracted from coffee grounds of a smaller particle size.

Example 4

Example 3 was repeated except that the oil bath temperature was varied. Results are given in Table 3.

## Table 3

| Fraction U.S. Screen | Oil Bath Temp. (°C) | Fiber* in Extracted Solids (% d.b.) |
|---|---|---|
| +12 [>1.70 mm] | 165 | 48.1 |
| Through 40 on 140 [<425 $\mu$m and >106 $\mu$m] | 165 | 63.2 |
| +12 [>1.70 mm] | 175 | 49.2 |
| Through 40 on 140 [<425 $\mu$m and >106 $\mu$m] | 175 | 61.5 |
| +12 [>1.70 mm] | 181 | 39.8 |
| Through 40 on 140 [<425 $\mu$m and >106 $\mu$m] | 181 | 48.8 |

(*Molecular weight above about 100,000 daltons)

This experiment again demonstrated that the soluble fiber component was more effectively extracted from smaller particle size materials. The extraction of solids (as measured by the GPC area) also increased with temperature although the fiber content decreased, probably due to the occurrence of some hydrolysis of the soluble fiber.

Example 5

Four thousand grams of an 8% by weight coffee extract solution were obtained by dissolving 320 gm. of a commercially available spray dried coffee product of 100% Robusta origin in 3680 gm. of distilled water. The solution was subjected to filtration in a system which included a jacketed feed tank, a high pressure variable speed recirculation pump, and a spiral wound membrane cartridge. The membrane used in this example was a spiral wound ultrafiltration membrane having a surface which is mostly polysulfone and having an average molecular weight cutoff of 100,000 daltons. The membrane cartridge dimensions are 2 x 20 inches (5.08 x 50.8 cm) and the total membrane surface area is about nine square feet (about 0.836 m³). The coffee solution is pumped directly from the feed tank to the cartridge. Permeate is continuously collected via a collection tube located at the center of the spiral wound cartridge. Retentate is returned to the feed tank and is thus continuously recycled across the membrane surface under pressure. The mode of operation in this example was batch with diafiltration. In this mode, permeate is withdrawn from the system while retentate is continuously recycled across the membrane surface under pressure. The net effect is a reduction of feed volume associated with an increase in the concentration of organic solids (including fiber) that are rejected by the membrane. The concentration of the organics not rejected by the membrane does not change significantly. However, as the retentate solids concentration becomes too great, the flux or flow of permeate decreases due to concentration polarization. In order to avoid this and to achieve a higher fiber concentration relative to the other solids in the retentate, water is added to the retentate and additional permeate removed from the system. In this manner, dissolved solids not rejected by the membrane are removed, and the fiber solids are concentrated relative to other solids in the retentate. This diafiltration technique was continued until a fiber level of roughly 36% in the retentate is achieved.

In this example, system temperature was set at 48°C and recirculation pressure was set to an average of about 60 psi (4.13 bar). After collection of one liter of permeate, one liter of distilled water was added to the feed tank. The collection of more permeate and addition of distilled water was repeated until six liters of distilled water were added and a total of 7100 ml permeate collected. The data is given in the following table:

Table 4

| Time (min.) | Retentate Temp. (°C) | Total Vol. Permeate Collected (ml) | Vol. Dist. Water Added for Diafiltration (ml) | Flux (ml/min.) |
|---|---|---|---|---|
| 0 | 34 | --- | --- | 28.6 |
| 35 | 40 | 1000 | 1000 | 25.0 |
| 75 | 46 | 2000 | 1000 | 21.2 |
| 122 | 48 | 3000 | 1000 | 21.2 |
| 169 | 48 | 4000 | 1000 | 21.2 |
| 216 | 48 | 5000 | 1000 | 21.2 |
| 263 | 48 | 6000 | 1000 | 21.2 |
| 325 | 48 | 7100 | --- | 17.6 |

The composite of the permeate fractions was 2.2% solids determined gravimetrically indicating 156 g of low molecular weight solids were removed in the diafiltration experiment.

The initial coffee, the coffee extract, and the permeate and retentate were analyzed for fiber. Fiber content of solid samples was determined by the Prosky method. Fiber content of liquid samples was determined by gel permeation chromatography (GPC). Results were as follows:

## Table 5

| | Sample | Soluble Fiber Content of Liquid Samples by GPC (%) | Soluble Fiber Content of Freeze Dried Samples by Prosky Method (%) | Insoluble Fiber Content of Freeze Dried Samples by Prosky Method* (%) |
|---|---|---|---|---|
| A | Initial Coffee | 20.1 | 25.8 | 1.5 |
| B | Permeate | 9.8 | 7.0 | 0 |
| C | Retentate | 35.6 | 39.7 | 0.4 |

*Not accurate at low insoluble fiber levels

The agreement between the GPC method and the Prosky method for soluble fiber appears good. The retentate sample when redissolved in water at the 1% solids level appeared darker than the control and somewhat diluted in coffee flavor attributes.

### Examples 6 and 7

Green robusta beans were water decaffeinated using treated activated carbon and then roasted. The coffee was ground to an auto drip grind size. Forty gram batches of the grounds were atmospherically extracted using a domestic drip brewer and 1700 ml of water. Each batch was extracted twice with fresh water to ensure removal of atmospherically soluble mostly low molecular weight solids.

Seven hundred grams of the spent grounds thus prepared were slurried with 2300 ml of water and ground in a colloid mill to a particle size of about 100 to 500 microns. Five batches of slurry totalling about 15 kg were prepared. The slurry was thermally treated in a laboratory-sized thermal plug flow reactor (TPFR). The system consisted of a diaphragm pump (maximum pressure 1100 psi [75.79 bar]) connected to a 25 ft., 3/16 in. (7.62 m, 0.48 cm) stainless steel coil suspended in a fluidized sand bath which was connected in series to a 1/4 in. (0.64 cm) stainless steel coil suspended in an ice bath. The exit of the ice bath coil was connected to an adjustable relief valve with a range of 350-600 psi (24.12 - 41.34 bar). The sand bath was fluidized with air and adjusted to about 385°F (196°C-199°C) and allowed to equilibrate. The pump rate was adjusted to about 150 gr. per minute and slurry was introduced into the heated coil.

In a first series of runs (Example 6) the average slurry residence time in the TPFR was 1.12 minutes at an average temperature of 192.6°C. In a second series of runs (Example 7) average residence time was 1.09 minutes and average temperature was 188.2°C.

The conversion of spent grounds in the slurry of soluble solids upon thermal treatment was determined by taking a weighed aliquot (about 10 gr.) of the slurry after TPFR treatment and filtering it through a tared Gooch crucible using a glass microfiber filter element. After suitable washing of the filter cake with distilled water (about 60 ml.) the weight of filtrate solids was determined by drying the filtrate in a tared beaker at 105°C overnight and the weight of residue was determined by drying the Gooch crucible at 105°C for the same time period. The same procedure was used for the control slurry without thermal treatment.

The filtrate was then freeze dried and stored in a refrigerator for analysis. Soluble fiber content was determined by the GPC method described above and was also determined by a commercial laboratory which utilized a modified Prosky method. The samples were also analyzed for carbohydrate content by quantitative saccharinification. Results are shown in Tables 6 and 7.

## Table 6

### Soluble Fiber Content

| Example | TPFR Conditions Time/Temp (min/°C) | Soluble Fiber by GPC (wt%) | Dietary Fiber by Prosky Soluble (wt%) | Insoluble* (wt%) |
|---------|-----------------|------------|----------|------------|
| 6 | 1.12/192.6 | 72 | 62.3 | 1.7 |
| 7 | 1.09/188.2 | 70 | 64.7 | 0.2 |

*Not accurate at low insoluble fiber levels

Table 7

Analysis of Fiber Content by Quantitative Saccharification

| Example | Galactose (wt.%) | Arabinose (wt.%) | Mannose (wt.%) | Total Sugars (wt.%) | Total Polymer[1] (wt.%) | Arabino-Galactan[2] (wt.%) | Mannan[3] (wt.%) |
|---|---|---|---|---|---|---|---|
| 6 | 47.2 | 8.5 | 8.0 | 63.7 | 57.3 | 50.1 | 7.2 |
| 7 | 44.3 | 9.6 | 7.1 | 61.0 | 54.9 | 48.5 | 6.4 |

(1) Calculated as 0.9 x total sugars

(2) Calculated as 0.9 x (galactose plus arabinose)

(3) Calculated as 0.9 x mannose

Example 8

This example relates to the production of a coffee product delivering at least about 0.5 grams of soluble fiber per 6 oz. (177.4 ml) cup of coffee. A coffee extract containing 18 wt.% soluble fiber at 22 wt.% solids is

14

produced by percolation and freeze concentration. The fiber fraction of Example 7 containing about 65% soluble fiber on a solids basis is concentrated to 20% solids. The concentrated coffee extract (359 gr. liquid basis) is then combined with the concentrated fiber fraction (505 gr. liquid basis) and the mixture is freeze dried. About 180 grams of freeze dried product were produced. The product when dissolved at 1.8 gr. in 6 oz. (177.4 ml) hot water had an acceptable coffee flavor while delivering the desired soluble fiber level of 0.5 grams per 6 ounce (177.4 ml) cup.

Example 9

This example relates to the production of a roasted and ground coffee product delivering at least 0.5 grams soluble fiber per 6 oz. (177.4 ml) cup of coffee. Thirty grams of a roasted and ground Colombian coffee were blended with 12 gr. of the freeze dried fiber fraction of Example 7 (65% soluble fiber on a solids basis). The mixture was placed in the basket of a Norelco Brewer and brewed with 1600 ml of water to give about 10 cups of coffee containing 0.5 grams of soluble fiber per 6 ounce (177.4 ml) cup.

Examples 10 and 11

This example also relates to the production of a coffee product delivering at least 0.5 grams fiber per 6 oz. (177.4 ml) cup of coffee. Caffeinated and decaffeinated coffee products were prepared by blending the soluble fiber product of Example 7 with commercial caffeinated and decaffeinated soluble coffees. The blended products, representing 1% of the final beverage weight, were dissolved in hot water and provided the amount of fiber, per six ounce (177.4 ml) cup, shown in Table 8.

Table 8

| Soluble fiber per Six Ounce (177.4 ml) Cup | | | |
|---|---|---|---|
| Example | Ingredient | Amount of Ingredient (grams) | Amount of Fiber (grams) |
| 10 | Caffeinated Soluble Coffee | 1.01 | .19 |
| | Fiber Product of Example 7 | 0.77 | 0.47 |
| | Total per 6 oz. (177.4 ml) cup | 1.78 | 0.66 |
| 11 | Decaffeinated Soluble Coffee | 1.11 | 0.25 |
| | Fiber Product of Example 7 | 0.67 | 0.41 |
| | Total per 6 oz. (177.4 ml) cup | 1.78 | 0.66 |

The coffee blends while somewhat diluted in flavor, were acceptable organoleptically, had acceptable cup color, and delivered the desired level of at least 0.5 grams of soluble dietary fiber per 6 ounce (177.4 ml) cup.

Examples 11-15

EXAMPLE OF PRODUCTS WITH MEMBRANE CONCENTRATED DIETARY SOLUBLE FIBER FRACTION

A 25/75 blend of roasted and ground Arabicas and Robustas is partially extracted (25%) at low temperature producing a first extract with 16% dietary fiber (dry basis). The partially extracted grounds are milled and hydrolyzed in a thermal plug flow reactor at time and temperature conditions (420°F [215.6°C] and 40 sec) which give a fiber-rich extract having a 40% dietary fiber concentration (dry basis) with a yield of an additional 19% soluble solids (based upon the starting roast and ground coffee). After separation from the remaining insolubles, this second soluble fiber-rich extract is then concentrated by membrane diafiltration to increase the dry basis dietary soluble fiber concentration to 90% (16 successive batch filtering steps with a 50% volume reduction) retaining 80% of its initial soluble fiber. This 90% soluble fiber-rich material is then concentrated by suitable low temperature means (e.g. vacuum evaporation) and recombined with the similarly concentrated first extract in proportions which produce the desired dietary fiber level. The combined extract may then be spray dried or freeze dried to produce a material suitable for packaging as a finished product.

When all of the first extract from a batch of coffee beans is blended with all of the fiber-rich extract obtained from the coffee grounds remaining after the first extraction, the product is said to be the "stoichiometric" product or the product in which the two extracts are blended in "stoichiometric ratio". It will be understood that the two extracts may be blended in other ratios. For example, twice the stoichiometric amount of the fiber rich extract may be employed. The blends shown in Table 9 were prepared.

## Table 9

| Example | Product Description Membrane Conc.? | Stoich. Ratio for Fiber-Rich Extract Solids[2] | Component | Amount in Extract Solids (lbs.) | Soluble Fiber (%) | Soluble Fiber (lbs.) |
|---|---|---|---|---|---|---|
| 11 | No | 1.0 | First Extract | 25.0 | 16.0 | 4.0 |
| | | | Fiber-rich Extract | 19.0 | 40.0 | 7.6 |
| | | | Blended Product | 44.0 | 26.4 | 11.6 |
| 12 | Yes[1] | 1.0 | First Extract | 25.0 | 16 | 4.0 |
| | | | Fiber-rich Extract | 6.8 | 90 | 6.1 |
| | | | Blended Product | 31.8 | 31.8 | 10.1 |
| 13 | Yes[1] | 1.7 | First Extract | 25.0 | 16.0 | 4.0 |
| | | | Fiber-rich Extract | 12.0 | 90.0 | 10.8 |
| | | | Blended Product | 37.0 | 40.0 | 14.8 |
| 14 | Yes[1] | 3.12 | First Extract | 25.0 | 16.0 | 4.0 |
| | | | Fiber-rich Extract | 21.2 | 90.0 | 19.1 |
| | | | Blended Product | 46.2 | 50.0 | 23.1 |
| 15 | Yes[1] | 5.40 | First Extract | 25.0 | 16.0 | 4.0 |
| | | | Fiber-rich Extract | 36.7 | 90.00 | 33.0 |
| | | | Blended Product | 61.7 | 60.00 | 37.0 |

[1] Membrane concentration to 90%
[2] The numerical value for the fiber-rich extract solids and is the amount relative to its stoichiometric amount.

For example, the stoichiometric amount of the membrane concentrated fiber-rich extract solids is 6.8 lbs (3.08 kg). The amount used in Example 14 is 21.2 pounds (9.62 kg) which is equal to 21.2 ÷ 6.8 [9.62 ÷ 3.08] (or 3.12 times the stoichiometric amount.

Example 16

This example relates to the production of coffee products made by combining first and fiber-rich extracts in stoichiometric proportion.

In a first run, a first extract of 20% roast yield and containing 16% dietary soluble fiber is obtained by atmospheric extraction of a 25/75 Arabic/Robusta coffee blend. Extraction of the partially spent grounds is then effected in a TPFR at 481°F (249.4°C) for 5 seconds to produce a fiber-rich extract containing 17% additional soluble solids, based on the initial weight of the coffee blend, containing 50% dietary soluble fiber.

In a second run, extraction in the TPFR is carried out at 380°F (193.3°C) for 73 seconds, yielding 14.9% additional solids containing 43.8% dietary soluble fiber. After drying, the first and second extracts are combined, resulting in a stoichiometric product blend containing 27.8% dietary soluble fiber.

Examples 17-20

These examples relate to the production of coffee products made by combining first and fiber-rich extracts using more than a stoichiometric amount of the fiber-rich extract.

The first extraction is carried out as in Example 16 to produce a first extract of 20% roast yield and containing 16% dietary soluble fiber. This extract is combined with a fiber-rich extract resulting from extraction in a TPFR at 481°F (249.4°C) for 5 seconds. This fiber-rich extract contained an additional 13.4% solids based on the coffee and contained 53.4% dietary soluble fiber. Results are shown in Table 10.

## Table 10

| Example | Amount | Ingredient | Amount in Extract | | |
|---|---|---|---|---|---|
| | | | Solids | Soluble Fiber | |
| | | | (lbs.) | (%) | (lbs.) |
| 17 | 1.0 x Stoich. | 1st Extract | 20.0 | 16.0 | 3.2 |
| | 1.53 x Stoich. | 2nd Extract | 20.6 | 53.0 | 11.0 |
| | - | Product Blend | 40.6 | 35.0 | 14.2 |
| 18 | 1.0 x Stoich. | 1st Extract | 20.0 | 16.0 | 3.2 |
| | 2.66 x Stoich. | 2nd Extract | 35.6 | 53.4 | 19.0 |
| | - | Product Blend | 55.6 | 40.0 | 22.2 |
| 19 | 1.0 x Stoich. | 1st Extract | 20.0 | 16.0 | 3.2 |
| | 5.13 x Stoich. | 2nd Extract | 68.7 | 53.4 | 36.7 |
| | - | Product Blend | 88.7 | 45.0 | 39.9 |
| 20 | 1.0 x Stoich. | 1st Extract | 20.0 | 16.0 | 3.2 |
| | 14.7 x Stoich. | 2nd Extract | 198.0 | 53.4 | 105.8 |
| | - | Product Blend | 218.0 | 50.0 | 109.0 |

Achieving a 60% dietary soluble fiber finished product by this means is also possible if one operates at conditions which yield a fiber-rich extract with greater than 60% soluble fiber.

Example 21

A conventional commercial percolation process has been used to produce a primary extract from a medium roast color roasted and ground 100% robusta coffee. The feed water temperature used in the percolation process is 225°F (107.2°C), such that only the easily extracted "atmospheric" solids are present in the extract.

The percolation time and amount of water has been adjusted such that 20% of the original roasted and ground material is extracted.

The material balance based upon 100 pounds (45.36 kg) of starting roasted and ground coffee is shown in Table 11. Note that 11.8/15 (78.7%) of the arabinogalactan is retained in the partially extracted coffee grounds and that on a dry basis the primary extract is 3.2/20 (16%) dietary soluble fiber (all the arabinogalactan extracted under these conditions). The cellulose, lipid (oil), etc. portion of the starting coffee is not extracted to any significant degree.

EP 0 554 008 A2

## Table 11

| Component | Starting R&G (as is) | (dry basis) | Primary Extract (as is) | (dry basis) | Partially Extracted Coffee Grounds (as is) | (dry basis) |
|---|---|---|---|---|---|---|
| Moisture | 7.00% | n.a. | 88.00% | n.a. | 50.00% | n.a. |
| Arabino-galactan | 15.00% | 16.13% | n.i. | n.a. | 8.08% | 16.16% |
| Hydrolyzed Arabino-galactan | n.a. | n.a. | 1.92% | 16.00% | n.i. | n.a. |
| Cellulose Lipids, etc. | 26.00% | 27.96% | 0.00% | 0.00% | 17.81% | 35.62% |
| Other solids | 52.00% | 55.91% | 10.08% | 84.00% | 24.11% | 48.22% |
| Total | 100.00% | 100.00% | 100.00% | 100.00% | 100.00% | 100.00% |

| POUNDS (KG) of: | Starting R&G (as is) | (dry basis) | Primary Extract (as is) | (dry basis) | Partially Extracted Coffee Grounds (as is) | (dry basis) |
|---|---|---|---|---|---|---|
| Moisture | 7.00 (3.18) | n.a. (n.a.) | 146.67 (66.53) | n.a. (n.a.) | 73.00 (33.11) | n.a. (n.a.) |
| Arabino-galactan | 15.00 (6.80) | 15.00 (6.80) | n.i. (n.i.) | n.a. (n.a.) | 11.80 ( 5.35) | 11.80 (5.35) |
| Hydrolyzed Arabino-galactan | n.a. (n.a.) | n.a. (n.a.) | 3.20 1.45) | 3.20 (1.45) | n.i. (n.i.) | n.a. (n.a.) |
| Cellulose, Lipids etc. | 26.00 (11.79) | 26.00 (11.79) | 0.00 ( 0.00) | 0.00 ( 0.00) | 26.00 (11.79) | 26.00 (11.79) |
| Other solids | 52.00 (23.59) | 52.00 (23.59) | 16.80 ( 7.62) | 16.80 ( 7.62) | 35.20 (15.97) | 35.20 (15.97) |
| Total | 100.00 (43.56) | 93.00 (42.18) | 166.67 (75.60) | 20.00 ( 9.07) | 146.00 (66.22) | 73.00 (33.11) |

The partially extracted coffee grounds are now milled to reduce the average particle size and a more dilute slurry (10% solids) is processed in a thermal plug flow reactor. Optimum conditions for the reaction can be determined by the objectives set for the product. Two objectives are analysed in this example.

A) Maximise the amount of secondary extract solids produced such that at least 30% are dietary soluble fiber on a dry basis.

B) Maximize the percentage of dietary soluble fiber in a product made by recombining the primary and the secondary extracts (again on a dry basis) in a stoichiometric ratio.

Sample Calculations

First Calculation

The dry basis yield of dietary soluble fiber in a thermal plug flow reactor (B) is described by equation (1):
$$B = A_0 [k_1/(k_2 - k_1)] [e^{-k_1 t} - e^{-k_2 t}]$$
wherein $A_0$ is the weight fraction, on a dry basis, of the partially extracted roast and ground coffee which is arabinogalactan. For this particular coffee $A_0$ is 0.162. (From Table 11, 11.8 ÷ 73 x 100 = 0.162.) The expressions for $k_1$ and $k_2$ are as given earlier in the specification.

Thus, after substituting all of these values, one simply chooses an initial time and temperature and calculates B. Accordingly, for a time of 30 seconds and a temperature of 859.7°Rankine (477.6°C), the fiber yield is 9.23% of the partially extracted roast and ground coffee solids or 6.74% of the original roasted and ground material. For 100 pounds of roast and ground coffee, the dry basis yield (B) of the second extraction step is thus 6.74 pounds of dietary soluble fiber.

Second Calculation

To calculate the yield, on a dry basis, of the total soluble solids in a thermal plug flow reactor one employs equation (2):
$$E = D_0 [1 - e^{-kt}]$$
wherein $D_0$ is the weight fraction of the original coffee which is extractable under the operating conditions less the solids extracted in the first extraction step. This can be defined as the original coffee weight minus the original weight due to moisture, less the weight of cellulose, lipids, etc., and less the solids removed in the first extraction step. For this particular coffee $D_0$ is 0.470.

The remaining values are as defined earlier in the specification. Then, choosing a time of 30 seconds and a temperature of 859.7°Rankine (477,6°C),one calculates that the yield of total soluble solids on a dry basis amounts to 11.45% of the original roasted and ground material or 15.69% of the partially extracted grounds solids before the secondary extraction or 11.45 pounds of soluble solids including the dietary soluble solids fraction. Therefore, using the result of the first calculation, 58.86% (6.74 ÷ 11.45 x 100) of the soluble solids on a dry basis are dietary soluble fiber. Further, if the fiber-rich extract is recombined with the first extract, one obtains a combined extract which is 31.61% dietary soluble fiber on a dry basis.

Optimization. As mentioned above, an objective of the invention is to produce, from partially spent coffee grounds, a coffee extract containing at least 30% by weight of soluble fiber based on the total dry weight of soluble solids. Conditions for achieving this objective are calculated as indicated above. Sample calculations for extraction of partially spent 100% Robusta coffee grounds in a TPFR at 300°F (148.9°C) and at 410°F (210°C), after conventional commercial percolation as described above are set forth in Tables 12 and 13.

From the fourth column in Table 12 it will be seen that it is possible to obtain this objective at any time up to 2160 seconds at 300°F (148.9°C). Similarly, in Table 13 this objective can be reached at any time up to 120 seconds at 410°F (210°C).

## Table 12

### Sample Calculations: Extraction Temperature = 300°F (148.9°C)

| | Secondary Extract | | | Combined Extract | | |
|---|---|---|---|---|---|---|
| Time | Soluble Fiber | Total Soluble Solids | Soluble Fiber | Total Soluble Solids | Soluble Fiber | Soluble Fiber |
| (sec.) | (lbs.[kg]) | (lbs.[kg]) | (%d.b.) | (lbs.[kg]) | (%d.b.) | (lbs.[kg]) |
| 120 | 1.28 [0.58] | 2.40 [1.09] | 53.4% | 22.40 [10.16] | 20.0% | 4.48 [2.03] |
| 240 | 2.40 [1.09] | 4.68 [2.12] | 51.4% | 24.68 [11.19] | 22.7% | 5.60 [2.54] |
| 360 | 3.38 [1.53] | 6.84 [3.10] | 49.5% | 26.84 [12.17] | 24.5% | 6.58 [2.98] |
| 480 | 4.24 [1.92] | 8.89 [4.03] | 47.6% | 28.89 [13.10] | 25.7% | 7.42 [3.37] |
| 600 | 4.98 [2.26] | 10.84 [4.92] | 45.9% | 30.84 [13.99] | 26.5% | 8.17 [3.71] |
| 720 | 5.62 [2.55] | 12.69 [5.76] | 44.3% | 32.69 [14.83] | 27.0% | 8.83 [4.01] |
| 840 | 6.17 [2.80] | 14.44 [6.55] | 42.7% | 34.44 [15.62] | 27.2% | 9.37 [4.25] |
| 960 | 6.65 [3.02] | 16.11 [7.31] | 41.3% | 36.11 [16.38] | 27.3% | 9.86 [4.47] |
| 1080 | 7.05 [3.20] | 17.68 [8.02] | 39.9% | 37.68 [17.09] | 27.2% | 10.2 [4.63] |
| 1200 | 7.39 [3.35] | 19.18 [8.70] | 38.5% | 39.18 [17.77] | 27.0% | 10.6 [4.81] |
| 1320 | 7.68 [3.48] | 20.60 [9.34] | 37.3% | 40.60 [18.42] | 26.8% | 10.9 [4.94] |
| 1440 | 7.92 [3.59] | 21.95 [9.96] | 36.1% | 41.95 [19.03] | 26.5% | 11.1 [5.03] |
| 1560 | 8.12 [3.68] | 23.23 [10.54] | 34.9% | 43.23 [19.61] | 26.2% | 11.3 [5.13] |
| 1680 | 8.28 [3.76] | 24.45 [11.09] | 33.9% | 44.45 [20.16] | 25.8% | 11.5 [5.22] |
| 1800 | 8.40 [3.81] | 25.60 [11.16] | 32.8% | 45.60 [20.68] | 25.4% | 11.6 [5.26] |
| 1920 | 8.50 [3.86] | 26.69 [12.11] | 31.8% | 46.69 [21.98] | 25.1% | 11.7 [5.31] |
| 2040 | 8.57 [3.89] | 27.73 [12.58] | 30.9% | 47.73 [21.65] | 24.7% | 11.8 [5.35] |
| 2160 | 8.61 [3.91] | 28.71 [13.02] | 30.0% | 48.71 [22.09] | 24.3% | 11.8 [5.35] |
| 2280 | 8.64 [3.92] | 29.65 [13.45] | 29.1% | 49.65 [22.66] | 23.8% | 11.8 [5.35] |
| 2400 | 8.65 [3.92] | 30.54 [13.85] | 28.3% | 50.54 [22.92] | 23.4% | 11.8 [5.35] |
| 2520 | 8.64 [2.92] | 31.38 [14.23] | 27.5% | 51.38 [23.31] | 23.0% | 11.8 [5.35] |

EP 0 554 008 A2

Table 13

Sample Calculations: Extraction Temperature = 410°F (210°C)

| | Secondary Extract | | | Combined Extract | | |
|---|---|---|---|---|---|---|
| Time | Soluble Fiber | Total Soluble Solids | Soluble Fiber | Total Soluble Solids | Soluble Fiber | Soluble Fiber |
| (sec.) | (lbs.[kg]) | (lbs.[kg]) | (%d.b.) | (lbs.[kg]) | (%d.b.) | (lbs.[kg]) |
| 6 | 2.44 [1.11] | 3.32 [1.47] | 73.8% | 23.31 [10.57] | 24.2% | 5.64 [2.56] |
| 12 | 4.36 [1.98] | 6.38 [2.89] | 68.3% | 26.38 [11.97] | 28.7% | 7.57 [3.43] |
| 18 | 5.87 [2.66] | 9.24 [4.19] | 63.6% | 29.24 [13.26] | 31.0% | 9.06 [4.11] |
| 24 | 7.06 [3.20] | 11.90 [5.40] | 59.3% | 31.90 [14.47] | 32.2% | 10.3 [4.67] |
| 30 | 7.99 [3.62] | 14.37 [6.52] | 55.6% | 34.37 [15.59] | 32.6% | 11.2 [5.08] |
| 36 | 8.71 [3.95] | 16.66 [7.56] | 52.3% | 36.66 [16.63] | 32.5% | 11.9 [5.40] |
| 42 | 9.28 [4.21] | 18.80 [8.53] | 49.3% | 38.80 [17.60] | 32.2% | 12.5 [5.67] |
| 48 | 9.71 [4.40] | 20.78 [9.43] | 46.7% | 40.78 [18.50] | 31.7% | 12.9 [5.85] |
| 54 | 10.04 [4.55] | 22.63 [10.26] | 44.4% | 42.63 [19.33] | 31.1% | 13.3 [6.03] |
| 60 | 10.30 [4.67] | 24.34 [11.04] | 42.3% | 44.34 [20.11] | 30.4% | 13.5 [6.12] |
| 66 | 10.48 [4.75] | 25.94 [11.77] | 40.4% | 45.94 [20.83] | 29.8% | 13.6 [6.17] |
| 72 | 10.62 [4.82] | 27.42 [12.44] | 38.7% | 47.42 [21.51] | 29.1% | 13.8 [6.26] |
| 78 | 10.72 [4.86] | 28.80 [13.06] | 37.2% | 48.80 [22.14] | 28.5% | 13.9 [6.30] |
| 84 | 10.79 [4.89] | 30.08 [13.64] | 35.9% | 50.08 [22.72] | 27.9% | 14.0 [6.35] |
| 90 | 10.83 [4.91] | 31.27 [14.18] | 34.6% | 51.27 [23.26] | 27.4% | 14.0 [6.35] |
| 96 | 10.85 [4.92] | 32.38 [14.69] | 33.5% | 52.38 [23.76] | 26.8% | 14.0 [6.35] |
| 102 | 10.86 [4.93] | 33.40 [15.15] | 32.5% | 53.40 [24.22] | 26.3% | 14.0 [6.35] |
| 108 | 10.85 [4.92] | 34.36 [15.58] | 31.6% | 54.36 [24.66] | 25.8% | 14.0 [6.35] |
| 114 | 10.83 [4.91] | 35.25 [15.99] | 30.7% | 55.25 [25.06] | 25.4% | 14.0 [6.35] |
| 120 | 10.81 [4.90] | 36.08 [16.36] | 30.0% | 56.08 [25.44] | 25.0% | 14.0 [6.35] |
| 126 | 10.78 [4.89] | 36.85 [16.71] | 29.3% | 56.85 [25.79] | 24.6% | 14.0 [6.35] |

A second objective is maximize the amount of soluble solids having a soluble fiber content of at least 30%. This is also determined from calculations such as depicted in Tables 12 and 13. For example, if the object is to maximize the amount of soluble solids having a soluble fiber content of 40%, it will be seen from the fourth columns of Tables 12 and 13 that this objective is reached at reaction times of up to about 1000 seconds at 300°F (148.9°C) and up to 66 seconds at 410°F (210°C).

However, the total amount of such soluble fiber is significantly greater at the higher temperature.

A third objective is to be able to achieve a product having a soluble fiber content of at least 30% by combining first and second extracts in stoichiometric proportion. From the sixth columns of Tables 12 and 13 it will be seen that this objective can be reached when operating the TPFR at 410°F (210°C), but not at 300°F (148.9°C). A blended product of this type can be achieved when the second extraction is carried out at times of from about 15 to 60 seconds at 410°F (210°C).

A fourth goal, that of maximizing the amount of high fiber blended product is also determined with reference to the results of calculations depicted in Figures 12 and 13. For example, the maximum amount of combined product (13.5 pounds [6.12 kg]) having more than 30% soluble fiber content extracted at 410°F (210°C) is achieved by a residence time of up to about 60 seconds as shown in the last column of Table 13. Exceeding residence time in the TPFR above 84 seconds at 410°F (210°C) will not increase the total combined stoichiometric amount of soluble fiber.

Tables 12 and 13 depict calculations for two temperature extractions in the TPFR. These calculations are repeated at other temperatures, preferably many temperatures over the entire temperature range, to give a more precise indication of the conditions needed to reach the objectives mentioned above.

Example 22

A fiber-rich extract is subjected to successive diafiltration steps. Results are given in Table 14. A reconstitution of the retentate with water was used for each step. The content of soluble fiber increased from 66% to 90% with a loss of about 12%.

Table 14

| Molecular-Weight Fraction (Daltons) | Ri | Initial Species Concentration (dry basis)* | Successive Diafiltration Steps | | | | | . . . | |
|---|---|---|---|---|---|---|---|---|---|
| | | | 1 | 2 | 3 | 4 | 5 | | 9 |
| >100,000 | 0.98 | 66.27 | 65.36 | 64.46 | 63.57 | 62.7 | 61.83 | | 58.50 |
| 50,000-100,000 | 0.95 | 0.81 | 0.78 | 0.76 | 0.73 | 0.71 | 0.68 | | 0.59 |
| 10,000- 50,000 | 0.8 | 3.27 | 2.85 | 2.48 | 2.16 | 1.88 | 1.64 | | 0.94 |
| 5,000- 10,000 | 0.75 | 4.05 | 3.41 | 2.86 | 2.41 | 2.03 | 1.7 | | 0.85 |
| > 5,000 | 0.7 | 25.6 | 20.79 | 16.89 | 13.72 | 11.14 | 9.05 | | 0.62 |
| %Total Solids Retained | – | 100.00 | 93.19 | 87.45 | 82.58 | 78.4 | 74.9 | | 64.82 |
| Fiber Concentration (% Dry Basis) | | 66.27 | 70.14 | 73.71 | 76.98 | 79.92 | 82.55 | | 90.25 |
| % of Original Fiber Retained | | 100 | 98.62 | 97.27 | 95.93 | 94.61 | 93.3 | | 88.27 |

*Actual concentration initially would be 8-10% soluble solids in water.

The foregoing examples were presented for the purpose of illustration and description only and are not to be construed as limiting the scope of the invention in any way. The scope of the invention is to be determined by the claims appended hereto.

23

**Claims**

1. A process for the production of a soluble fiber-rich product derived from partially extracted roasted and ground coffee comprising the steps of:
   contacting partially extracted roasted and ground coffee with water at a temperature and for a time sufficient to produce spent coffee grounds and a soluble fiber-rich coffee extract containing at least 30% by weight of soluble fiber having a molecular weight at least about 100,000 daltons, based on the total dry weight of soluble solids; and
   separating said fiber-rich coffee extract from said spent coffee grounds.

2. A process as claimed in claim 1, wherein said contacting step is conducted at a temperature and for a time sufficient to produce a fiber-rich coffee extract which contains 30-70% by weight of soluble fiber, based on the total dry weight of soluble solids.

3. A process as claimed in claim 1 or claim 2, wherein said partially extracted roasted and ground coffee is produced by extracting roasted and ground coffee at a temperature of from about 100 to 250°F (37.8 to 121.1°C) and for a time sufficient to produce a first coffee extract having a roast yield of 15-40% and to produce partially extracted roast and ground coffee which retains a majority of its original soluble fiber and soluble fiber precursors.

4. A process as claimed in claim 3, wherein said roast yield is 20-30%.

5. A process as claimed in claim 4, further comprising combining said fiber-rich extract with said first coffee extract to produce a soluble coffee product which is capable of delivering at least 0.5 grams of soluble fiber per 6 ounce (177.4 ml) cup of coffee brew.

6. A process as claimed in claim 5, wherein at least one of said first coffee extract and said fiber-rich extract is concentrated prior to being combined.

7. A process as claimed in claim 5, wherein at least one of said first coffee extract and said fiber-rich extract is dried prior to being combined.

8. A process as claimed in any one of claims 5 to 7, wherein said first extract and said fiber-rich extract are combined in stoichiometric ratio.

9. A process as claimed in any one of claims 5 to 7, wherein the amount of said fiber-rich extract combined with said first extract is in excess of the stoichiometric amount.

10. A process as claimed in any one of claims 1 to 9, wherein said extraction of said roast and ground coffee is carried out at a pressure not significantly exceeding atmospheric pressure.

11. A process as claimed in any one of claims 1 to 10, further comprising milling said partially extracted roast and ground coffee to an average particle size of less than 500 micrometers prior to contacting it with said water.

12. A process as claimed in any one of claims 1 to 11, further comprising the step of subjecting said soluble fiber-rich coffee extract to filtration to recover therefrom said soluble fiber having a molecular weight in excess of about 100,000 daltons.

13. A process as claimed in claim 12, further comprising the step of drying the recovered soluble fiber.

14. A process as claimed in any one of claims 1 to 13, further comprising combining a sufficient amount of the soluble fiber of said fiber-rich extract with a soluble coffee product to provide a soluble coffee product which is capable of delivering at least 0.5 grams of soluble fiber per 6 ounce (177.4 ml) cup of coffee brew.

15. A process as claimed in any one of claims 1 to 13, further comprising combining a sufficient amount of said soluble fiber of said fiber-rich extract with roast and ground coffee to provide a brewable roast and ground coffee product which is capable of delivering at least 0.5 grams of soluble fiber per 6 ounce (177.4 ml) cup of coffee brew.

16. A roast and ground coffee product which comprises sufficient 100% coffee-derived soluble fiber to deliver at least 0.5 grams of 100% coffee-derived soluble fiber per 6 ounce (177.4 ml) cup of coffee brew prepared from said coffee product.

17. A roast and ground coffee product as claimed in claim 16 comprising sufficient 100% coffee-derived soluble fiber to deliver from about 0.7-1.1 grams of 100% coffee-derived soluble fiber per 6 ounce (177.4 ml) cup of coffee brew prepared from said coffee product.

18. A soluble coffee product comprising sufficient 100% coffee-derived soluble fiber to deliver at least 0.5 grams of coffee-derived soluble fiber per 6 ounce (177.4 ml) cup of coffee brew prepared from said coffee product.

19. A soluble coffee product as claimed in claim 18, wherein the content of said coffee-derived soluble fiber is 30-70% by weight, based on the dry weight of the coffee product.